# EUROPÄISCHE PATENTSCHRIFT

(11) **EP 1 934 079 B1**
(45) Veröffentlichungstag und Bekanntmachung des Hinweises auf die Patenterteilung: **01.07.2009**
(21) Anmeldenummer: 06792137.9
(22) Anmeldetag: 05.10.2006
(51) Int. Cl.: B60T 17/08, F16D 65/32, B60T 13/38

(54) **KOMBINIERTER BETRIEBSBREMS- UND FEDERSPEICHERBREMSZYLINDER MIT INNERER ENTLÜFTUNG**
COMBINED SERVICE BRAKE AND SPRING-LOADED BRAKE CYLINDER WITH AN INNER VENTILATION
CYLINDRE COMBINE DE FREIN DE SERVICE ET DE FREIN A RESSORT A PURGE D'AIR INTERNE

(30) Priorität: 06.10.2005 DE 102005047872
(43) Veröffentlichungstag der Anmeldung: 25.06.2008
(73) Patentinhaber: KNORR-BREMSE SYSTEME FÜR NUTZFAHRZEUGE GMBH, 80809 München (DE)
(72) Erfinder: LACHERMEIER, Jakob, 85356 Freising (DE)
(74) Vertreter: Mattusch, Gundula
(86) Internationale Anmeldenummer: PCT/EP2006/009090
(87) Internationale Veröffentlichungsnummer: WO 2007/039093

(56) Entgegenhaltungen:
- EP-A- 0 554 050
- EP-A1- 0 025 558
- DE-A1- 4 011 739
- GB-A- 1 237 641

## Beschreibung

### Stand der Technik

Die Erfindung geht aus von einem kombinierten Betriebsbrems- und Federspeicherbremszylinder mit einer in einem Gehäuse des Betriebsbremszylinders angeordneten druckbeaufschlagbaren Membran, welche auf der einen Seite eine mit einem Betriebsbremsdruck beaufschlagbare Betriebsbremskammer und auf der anderen Seite eine Rückholfeder aufnehmende Kammer begrenzt, einem in einem Gehäuse des Federspeicherbremszylinders angeordneten, durch eine Speicherfeder betätigbaren Federspeicherbremskolben, welcher auf der einen Seite eine Federspeicherbremskammer und auf der anderen Seite eine eine Speicherfeder aufnehmende Federkammer begrenzt und eine Kolbenstange aufweist, welche ein Entlüftungsventil trägt, das eine Strömungsverbindung zwischen der Federkammer und der Betriebsbremskammer herstellt oder sperrt, gemäß dem Oberbegriff von Anspruch 1.

Ein solcher kombinierter Betriebsbrems- und Federspeicherbremszylinder ist beispielsweise aus der DE 40 11 739 A1 bekannt. Das Entlüftungsventil ist dort endseitig im hohlen Kolbenrohr des Federspeicherbremskolbens angeordnet, welcher abhängig vom Betriebszustand in die Betriebsbremskammer hineinragen kann. Das Entlüftungsventil hat die Aufgabe, beim Lösen der Feststellbremse den durch das Zurückfahren des Feststellbremskolbens und dadurch sich verkleinernde Volumen der Federkammer dort entstehenden Überdruck abzubauen, indem es durch diesen in Öffnungsstellung geschaltet wird und eine Strömungsverbindung zwischen der Federkammer und der Betriebsbremskammer herstellt. Beim Anfahren auf einer ebenen Fahrstrecke ist die Betriebsbremskammer entlüftet und steht mit einer Entlüftung eines Druckregelmoduls in Verbindung, da eine Betriebsbremsung nach dem Lösen der Feststellbremse nicht notwendig ist. Dann kann zumindest ein Teil des in der Federkammer überschüssigen Luftvolumens ausströmen, welche folglich von dort nicht direkt in die Atmosphäre gelangt, z.B. über ein in der Wandung des Federkammer angeordnetes Ventil, sondern über den Be- und Entlüftungsweg der Betriebsbremskammer. Deshalb spricht man in diesem Zusammenhang auch von innerer Entlüftung.

Beim Anfahren an einer ansteigenden Fahrstrecke ist es jedoch bei zunächst zugespannter Feststellbremse notwendig, vor dem Lösen der Feststellbremse wenigstens kurzzeitig zusätzlich die Betriebsbremse zuzuspannen, um ein Zurückrollen des Fahrzeugs beim Anfahren zu verhindern. In diesem Fall wird die Betriebsbremskammer belüftet. Bei ausreichend hoher Bremsanforderung durch den Fahrer vermag der in der Betriebsbremskammer und zugleich an der einen Seite des Kolbens anstehende Betriebsbremsdruck diesen gegen die Wirkung des sich in der Federkammer aufbauenden Drucks am Ventilsitz und dadurch das Entlüftungsventil geschlossen zu halten. Befinden sich allerdings aufgrund einer entsprechend geringen Betriebsbremsanforderung des Fahrers der Betriebsbremsdruck und/oder der Betriebsbremsdruckgradient unterhalb gewisser Schwellwerte, so reicht der an der einen Seite des Kolbens anstehende Betriebsbremsdruck nicht aus, um das Entlüftungsventil geschlossen zu halten. Dann strömt Druckluft von der Betriebsbremskammer über das geöffnete Entlüftungsventil in die Federkammer. Von dort entweicht sie über die Kolbendichtung und die Gehäusedichtung in die Atmosphäre, was zum einen störende Geräusche verursacht. Zum andern steht das über das Entlüftungsventil abströmende Luftvolumen nicht mehr zum Aufbau der Betriebsbremskraft zur Verfügung.

Der vorliegenden Erfindung liegt die Aufgabe zugrunde, einen kombinierten Betriebsbrems- und Federspeicherbremszylinder der eingangs erwähnten Art derart weiter zu entwickeln, dass die oben genannten Nachteile vermieden werden.

Diese Aufgabe wird erfindungsgemäß durch die Merkmale von Anspruch 1 gelöst.

### Vorteile der Erfindung

Das Entlüftungsventil des kombinierten Betriebsbrems- und Federspeicherzylinders gemäß der Erfindung weist folgende kennzeichnende Merkmale auf :
a) Ein einen Ventilkörper tragender Kolben ist vorgesehen, welcher in einem Zylinder axial verschieblich geführt ist, wobei wenigstens eine erste sich am Kolben abstützende Druckfeder den Ventilkörper gegen einen ersten Ventilsitz am Kolben belastet,
b) der Kolben ist durch wenigstens eine zweite, sich an der Kolbenstange abstützende Druckfeder derart belastet, dass der Ventilkörper in Richtung auf einen zweiten Ventilsitz an der Kolbenstange und vom ersten Ventilsitz am Kolben weg gedrängt ist,
c) eine erste Kolbenfläche des Kolbens ist durch den Druck in der Federkammer in eine den Ventilkörper vom zweiten Ventilsitz abhebende Richtung und eine zweite Kolbenfläche durch den Druck in der Betriebsbremskammer in eine den Ventilkörper gegen den zweiten Ventilsitz drängenden und vom ersten Ventilsitz abhebenden Richtung belastet, wobei
d) bei vom ersten Ventilsitz und/oder bei vom zweiten Ventilsitz abgehobenen Ventilkörper eine Strömungsverbindung zwischen der Betriebsbremskammer und der Federkammer hergestellt wird.

Durch diese Maßnahmen wird sichergestellt, dass das Entlüftungsventil geschlossen bleibt, wenn bei zugespannter Feststellbremse gleichzeitig die Betriebsbremse zugespannt wird. Somit kann keine Druckluft mehr von der Betriebsbremskammer über das Entlüftungsventil in die Federkammer überströmen und von dort in die Atmosphäre entweichen, wodurch störende Strömungsgeräusche verhindert werden.

Durch die in den Unteransprüchen aufgeführten Maßnahmen sind vorteilhafte Weiterbildungen und Verbesserungen der in den unabhängigen Ansprüchen angegebenen Erfindung möglich.

Genaueres geht aus der folgenden Beschreibung von Ausführungsbeispielen hervor.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig.1: eine Schnittdarstellung eines kombinierten Betriebsbrems- und Federspeicherbremszylinders gemäß einer bevorzugten Ausführungsform der Erfindung mit einem Entlüftungsventil;
- Fig.2: das Entlüftungsventil von Fig.1 in Schließstellung;
- Fig.3: das Entlüftungsventil von Fig.1 in einer Öffnungsstellung während des Zuspannens der Feststellbremse;
- Fig.4: das Entlüftungsventil von Fig.1 in einer Öffnungsstellung während des Lösens der Feststellbremse.

### Beschreibung des Ausführungsbeispiels

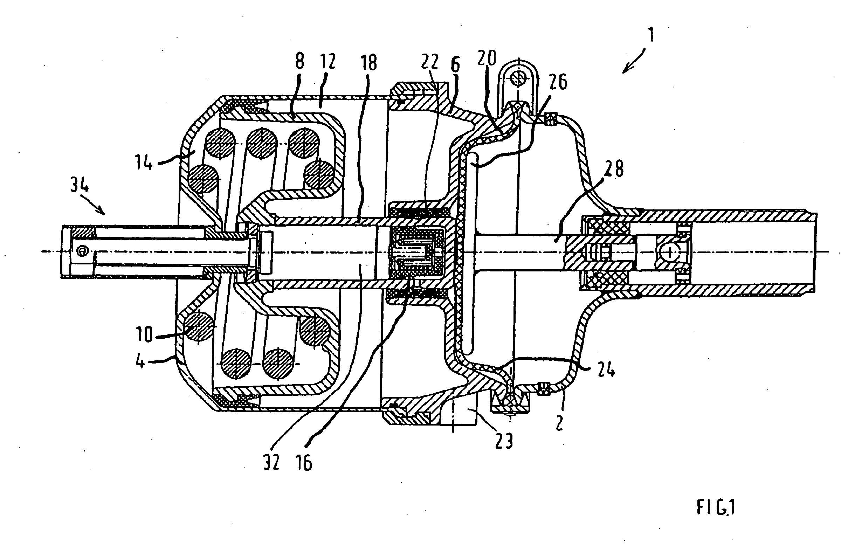

In Fig.1 ist zur beispielhaften Erläuterung der Erfindung ein kombinierter Betriebsbrems- und Federspeicherbremszylinder 1, nachfolgend Kombizylinder genannt, dargestellt. Der Kombizylinder besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab.

Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, über ein Entlüftungsventil 16 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer hohlen Kolbenstange 18 verbunden, welche sich durch die Zwischenwand 6 in eine Betriebsbremskammer 20 des Betriebsbremszylinders 2 erstreckt. Eine in der Zwischenwand 6 eingesetzte Dichtung 22 dichtet gegenüber der Außenwand der Kolbenstange 18 während deren Längsbewegung ab. In die Betriebsbremskammer 20 mündet ein Einlass 23, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein; an deren entgegengesetzter Seite ein Druckstück in Form eines Membrantellers 26 vorgesehen ist. Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Eine sich einerseits am Membranteller 26 und andererseits am Boden des Betriebsbremszylinders 2 abstützende, nicht gezeigte Rückholfeder sorgt dafür, dass die Druckstange 28 bei entlüfteter Betriebsbremskammer 20 in die Lösestellung zurückgeholt wird.

Das Entlüftungsventil 16 ist in dem vom Federspeicherbremskolben 8 weg weisenden Ende der Kolbenstange 18 angeordnet und genauer in deren Innenraum 32 aufgenommen. Dort ist zwar weiterhin eine hier nicht weiter interessierende Notlöseinrichtung 34 angeordnet, jedoch kann der Innenraum 32 der Kolbenstange 18 mit der Federkammer 14 kommunizieren.

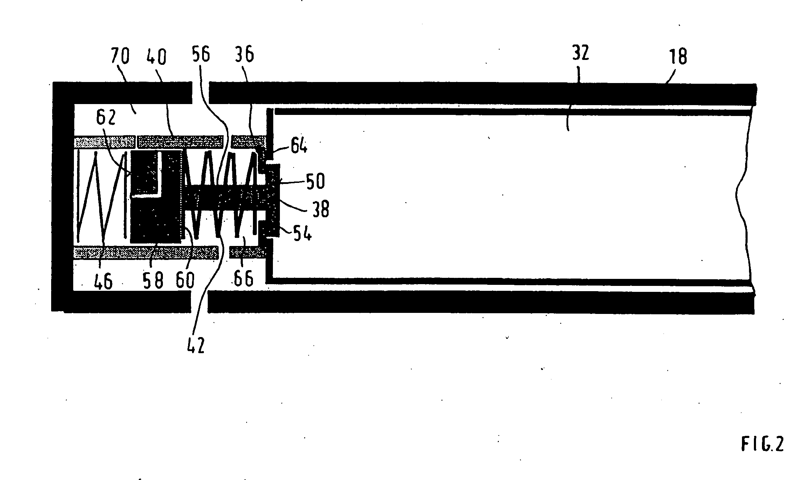

Das Entlüftungsventil 16 des kombinierten Betriebsbrems- und Federspeicherzylinders weist gemäß Fig.2 folgende Merkmale auf:
a) Ein einen Ventilkörper 36 tragender Kolben 38 ist vorgesehen, welcher in einem Zylinder 40 axial verschieblich geführt ist, wobei wenigstens eine erste sich am Kolben 38 abstützende Druckfeder 42 den Ventilkörper 36 gegen einen ersten Ventilsitz 44 am Kolben 38 belastet,
b) der Kolben 38 ist durch wenigstens eine zweite, sich an der Kolbenstange 18 abstützende Druckfeder 46 derart belastet, dass der Ventilkörper 36 in Richtung auf einen zweiten Ventilsitz 48 an der Kolbenstange 18 und vom ersten Ventilsitz 44 am Kolben 38 weg gedrängt ist,
c) eine erste Kolbenfläche 50 des Kolbens 38 ist durch den Druck in der Federkammer 14 in eine den Ventilkörper 36 vom zweiten Ventilsitz 48 abhebende Richtung und eine zweite Kolbenfläche 52 durch den Druck in der Betriebsbremskammer 20 in eine den Ventilkörper 36 gegen den zweiten Ventilsitz 48 drängenden und vom ersten Ventilsitz 44 abhebenden Richtung belastet, wobei
d) bei vom ersten Ventilsitz 44 und/oder bei vom zweiten Ventilsitz 48 abgehobenen Ventilkörper 36 eine Strömungsverbindung zwischen der Betriebsbremskammer 20 und der Federkammer 14 hergestellt wird.

Wie aus Fig.2 bis Fig.4 hervorgeht, hat der Kolben 38 im wesentlichen drei Abschnitte, einen ersten, der Federkammer 14 zugewandten Kolbenabschnitt mit einem ersten Kolbenteller 54, an dem die erste Kolbenfläche 50 und die zweite Kolbenfläche 52 ausgebildet ist, einen sich hieran anschließenden zweiten Kolbenabschnitt, der als Kolbenstange 56 ausgebildet ist und einen dritten, als zweiter Kolbenteller 58 ausgebildeten Kolbenabschnitt, an welchem eine dritte Kolbenfläche 60 und eine vierte Kolbenfläche 62 ausgebildet sind. Die dritte Kolbenfläche 60 und die vierte Kolbenfläche 62 sind beispielsweise gleich groß. Der Zylinder 40 ist dreh- und axialfest im Innenraum 32 der Kolbenstange 18 gehalten.

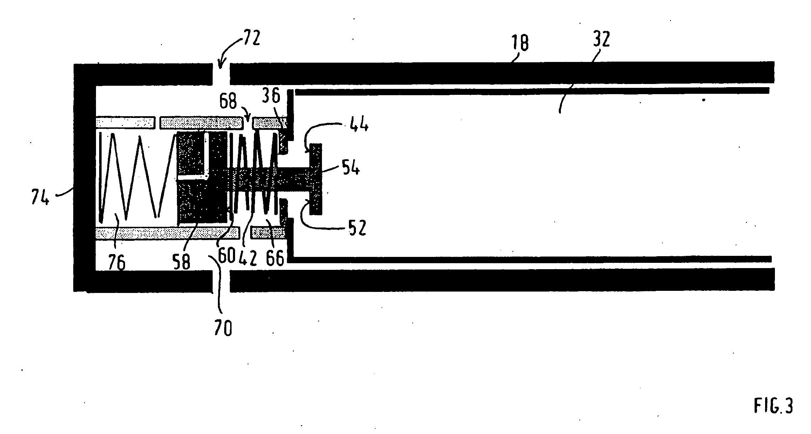

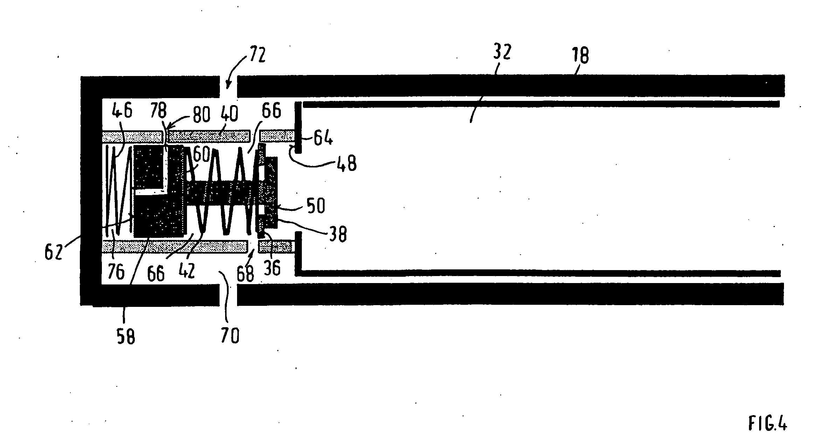

Zwischen der dritten Kolbenfläche 60, der radial inneren Umfangsfläche des Zylinders 40 und einem Boden 64 des Zylinders 40 ist eine erste Kammer 66 ausgebildet, wobei der Boden 64 des Zylinders 40 eine zentrale Durchgangsöffnung aufweist, durch welche sich der erste Kolbenteller 54 hindurcherstrecken kann. An seiner zur ersten Kammer 66 weisenden Fläche ist am Boden 64 des Zylinders 40 der zweite Ventilsitz 48 ausgebildet, wie Fig.4 zeigt. Der erste Ventilsitz 44 befindet sich an der zur ersten Kammer 66 weisenden zweiten Kolbenfläche 52 des Kolbens 38 (Fig.3). In der ersten Kammer 66 ist weiterhin die erste Druckfeder 42 aufgenommen, die sich einerseits am Ventilkörper 36 und andererseits an der dritten Kolbenfläche 60 am zweiten Kolbenteller 58 abstützt.

Der Ventilkörper 36 ist vorzugsweise als ein die Kolbenstange 56 umgebender Ring ausgebildet, dessen äußerer Durchmesser kleiner als der innere Durchmesser des Zylinders 40 ist, so dass zwischen dem Ring 36 und dem Zylinder 40 ein lichter Ringspalt vorhanden ist. Der Ring 36 dichtet daher nur in axialer Richtung gegen den ersten Ventilsitz 44 am ersten Kolbenteller 54 bzw. gegen den zweiten Ventilsitz 48 am Boden 64 des Zylinders 40.

Mittels einer radialen Durchgangsbohrung 68 im Zylinder 40 steht die erste Kammer 66 mit einer Ringkammer 70 stets, d.h. in jeder axialen Position des Kolbens 38 in Strömungsverbindung. Diese Ringkammer 70 umgibt den Zylinder 40 und ist wiederum über eine radiale Durchgangsbohrung 72 in der Kolbenstange 18 mit der Betriebsbremskammer 20 verbunden. Weiterhin ist zwischen dem zweiten Kolbenteller 58 und einem weiteren Boden 74 des Zylinders 40 eine dritte Kammer 76 ausgebildet, in welcher die zweite Druckfeder 46 aufgenommen ist, welche sich einerseits am zweiten Kolbenteller rund andererseits am weiteren Boden 74 des Zylinders 40 abstützt. Die erste Druckfeder 42 und die zweite Druckfeder 46 sind vorgespannt eingebaut.

Der zweite Kolbenteller 58 weist eine Kolbenbohrung 78 auf, mit einem axialen Abschnitt und einem radialen Abschnitt. Die Kolbenbohrung 78 kann eine Strömungsverbindung zwischen der dritten Kammer 76 und der Ringkammer 70 herstellen, vorausgesetzt, dass ihr radialer Abschnitt mit einer weiteren radialen Durchgangsbohrung 80 im Zylinder 40 fluchtet, wobei dieser Zustand in lediglich einer Stellung des Kolbens 38 gegeben ist (Fig.4).

In Fig.2 ist das Entlüftungsventil 16 in geschlossener Stellung gezeigt, d.h. dass der Ring 36 am ersten Ventilsitz 44 und am zweiten Ventilsitz 48 axial dichtend anliegt und folglich keine Strömungsverbindung zwischen dem Innenraum 32 der Kolbenstange 18, der unter dem Druck der Federkammer 14 steht, und der Ringkammer 70 vorhanden ist, welcher mit der Betriebsbremskammer 20 in Verbindung steht.

Ausgehend von einem Zustand, in welchem weder die Betriebsbremse noch die Feststellbremse betätigt ist, wird nun die Feststellbremse bei noch gelöster Betriebsbremse zugespannt. Durch den von der Speicherfeder 10 verschobenen Federspeicherbremskolben 12 vergrößert sich die Federkammer 14 schlagartig, wodurch der Druck dort stark absinkt. Auf die erste Kolbenfläche 50 wirkt damit der relativ niedrige Druck der Federkammer 14, die zweite Kolbenfläche 52 ist durch den Druck der Betriebsbremskammer 20 belastet, welcher dem demgegenüber höheren Atmosphärendruck entspricht.

Durch den Druckunterschied wird der Kolben 38 in Fig.3 gegen die Wirkung der sich verkürzenden ersten Druckfeder 42 nach rechts verschoben, wodurch der Ring 36 vom ersten Ventilsitz 44 abhebt und ein Strömungsquerschnitt zwischen dem Ring 36 und der Kolbenstange 56 freigegeben wird, durch welchen sich eine Strömung einstellt, mit welcher Luft aus der Betriebsbremskammer 20 über die Durchgangsbohrung 72 in der Kolbenstange 18 in die Ringkammer 70, von dort über die radiale Durchgangsbohrung 68 im Zylinder 40 in die erste klammer 66 und von dort schließlich in den Innenraum 32 der Kolbenstange 18 strömen kann, welcher wiederum mit der Federkammer 14 in druckleitender Verbindung steht. Somit kann ein Druckausgleich zwischen der Federkammer 14 und der Betriebsbremskammer 20 stattfinden. Hingegen bleibt der Ring 36 durch die Wirkung der ersten Druckfeder 42 dichtend gegen den zweiten Ventilsitz 48 am Boden 64 des Zylinders 40 gepresst.

Der sich allmählich vergrößernde Druck in der Federkammer 14 lastet auch auf der dritten Kolbenfläche 60, so dass der Kolben 38 infolge der sich dort ergebenden Druckkraft in Fig.3 nach links verschoben wird, bis der erste Ventilsitz 44 an der zweiten Kolbenfläche 52 wieder dichtend am Ring 36 anschlägt. Diese Bewegung wird durch die Federkraft der ersten Druckfeder 42 unterstützt, bis sich das Entlüftungsventil 16 wieder in der in Fig.2 gezeigten Schließstellung befindet.

Beim Lösen der Feststellbremse steigt der Druck in der Federkammer 14 infolge deren Verkleinerung an. Wie anhand von Fig.4 leicht vorstellbar ist, wirkt dieser erhöhte Druck auf die erste Kolbenfläche 50, wodurch sich der Kolben 38 gegen die Wirkung der sich verkürzenden zweiten Druckfeder 46 nach links bewegt und gleichzeitig der mit dem Kolben 38 über die erste Druckfeder 42 verspannte und dadurch mitführte Ring 36 vom zweiten Ventilsitz 48 am Boden 64 des Zylinders 40 abhebt. Da der Ring 36 nicht radial gegen den Zylinder 40 dichtet, sondern dort stets ein Ringspalt freigelassen ist, kann nun Druckluft von der Federkammer 14 über den Innenraum 32 der Kolbenstange 18, die erste Kammer 66, die Durchgangsbohrung 68 im Zylinder 40, die Ringkammer 70 und die Durchgangsbohrung 72 in der Kolbenstange 18 in die demgegenüber mit niedrigerem Druck beaufschlagte Betriebsbremskammer 20 strömen.

Gleichzeitig gerät der Kolben 38 in eine Stellung, in welcher der radiale Abschnitt der Kolbenbohrung 78 in Flucht mit der weiteren Durchgangsbohrung 80 im Zylinder 40 steht und folglich auch die dritte Kammer 76 mit dem in der Betriebsbremskammer 20 herrschenden Druck beaufschlagt wird, der infolge der Zuströmung von Druckluft aus der Federkammer 14 ansteigt. An dem zweiten Kolbenteller 58 steht folglich an der dritten Kolbenfläche 60 und an der vierten Kolbenfläche 62 der gleiche Betriebsbremsdruck an, so dass sich die entsprechenden Druckkräfte aufheben.

Nach erfolgtem Druckausgleich zwischen der Federkammer 14 und der Betriebsbremskammer 20 wird der Kolben 38 infolge der Wirkung der verkürzten zweiten Druckfeder 46 nach rechts in die Schließstellung befördert, in welcher der Ring 36 wiederum dichtend am zweiten Ventilsitz 48 axial anliegt.

Fig.2 kennzeichnet auch eine Schließstellung des Entlüftungsventils 16, welche sich einstellt, wenn bei zugespannter Feststellbremse zusätzlich die Betriebsbremse betätigt wird. Eine solche Situation ergibt sich beispielsweise beim Anfahren hangaufwärts.

Bei zugespannter Feststellbremse sinkt, wie bereits zu Fig.3 erläutert, der Druck in der Federkammer 14 ab, was dazu führt, dass der Kolben 38 sich nach rechts bewegt. Nach erfolgtem Druckausgleich zwischen der Federkammer 14 und der Betriebsbremskammer 20, d.h. bei durch Zuströmen von Luft aus der Betriebsbremskammer 20 erhöhtem Druck in der Federkammer 14 stellt die erste Druckfeder 42 wieder die Schließstellung her. Wenn nun ausgehend von diesem Zustand zusätzlich die Betriebsbremse betätigt wird, steigt der Druck in der Betriebsbremskammer 20 an. Dieser erhöhte Betriebsbremsdruck steht dann auch in der ersten Kammer 66 an, weil Druckluft dorthin über die Durchgangsbohrung 72 in der Kolbenstange 18, die Ringkammer 70 und die Durchgangsbohrung 68 im Zylinder 40 gelangen kann. Dieser Betriebsbremsdruck wirkt auch auf den Ring 36, wodurch dieser seine Dichtwirkung gegen den ersten Ventilsitz 44 und den zweiten Ventilsitz 48 verstärkt und die Wirkung der ersten Druckfeder 42 unterstützt, die den Ring 36 dort hält.

### Bezugszeichenliste

- 1: Betriebsbrems- und Federspeicher
- 2: Betriebsbremszylinder
- 4: Federspeicherbremszylinder
- 6: Zwischenwand
- 8: Federspeicherbrmskolben
- 10: Speicherfeder
- 12: Federspeicherbrmskammer
- 14: Federkammer
- 16: Entlüftungsventil
- 18: Kolbenstange
- 20: Betriebsbremskammer
- 22: Dichtung
- 23: Einlass
- 24: Membrane
- 26: Membranteller
- 28: Druckstange
- 32: Innenraum
- 34: Notlöseeinrichtung
- 36: Ventilkörper
- 38: Kolben
- 40: Zylinder
- 42: erste Druckfeder
- 44: erster Ventilsitz
- 46: zweite Druckfeder
- 48: zweiter Ventilsitz
- 50: erste Kolbenfläche
- 52: zweite Kolbenfläche
- 54: erster Kolbenteller
- 56: Kolbenstange
- 58: zweiter Kolbenteller
- 60: dritte Kolbenfläche
- 62: vierte Kolbenfläche
- 64: Boden
- 66: erste Kammer
- 68: Durchgangsbohrung
- 70: Ringkammer
- 72: Durchgangsbohrung
- 74: Boden
- 76: dritte Kammer
- 78: Kolbenbohrung
- 80: Durchgangsbohrung

## Patentansprüche

1. Kombinierter Betriebsbrems- und Federspeicherbremszylinder (1) mit:
a) Einer in einem Gehäuse des Betriebsbremszylinders (2) angeordneten druckbeaufschlagbaren Membran (24), welche auf der einen Seite eine mit einem Betriebsbremsdruck beaufschlagbare Betriebsbremskammer (20) und auf der anderen Seite eine Rückholfeder aufnehmende Kammer begrenzt,
b) einem in einem Gehäuse des Federspeicherbremszylinders (4) angeordneten, durch eine Speicherfeder (10) betätigbaren Federspeicherbremskolben (8), welcher auf der einen Seite eine Federspeicherbremskammer (12) und auf der anderen Seite eine eine Speicherfeder (10) aufnehmende Federkammer (14) begrenzt und eine Kolbenstange (18) aufweist, welche ein Entlüftungsventil (16) trägt, das eine Strömungsverbindung zwischen der Federkammer (14) und der Betriebsbremskammer (20) herstellt oder sperrt,
**dadurch gekennzeichnet, dass** das Entlüftungsventil (16) folgende Merkmale aufweist:
c) Ein einen Ventilkörper (36) tragender Kolben (38) ist vorgesehen, welcher in einem Zylinder (40) axial verschieblich geführt ist, wobei wenigstens eine erste sich am Kolben (38) abstützende Druckfeder (42) den Ventilkörper (36) gegen einen ersten Ventilsitz (44) am Kolben (38) belastet,
d) der Kolben (38) ist durch wenigstens eine zweite, sich an der Kolbenstange (18) abstützende Druckfeder (46) derart belastet, dass der Ventilkörper (36) in Richtung auf einen zweiten Ventilsitz (48) an der Kolbenstange (18) und vom ersten Ventilsitz (44) weg gedrängt ist,
e) eine erste Kolbenfläche (50) des Kolbens (38) ist durch den Druck in der Federkammer (14) in eine den Ventilkörper (36) vom zweiten Ventilsitz (48) abhebende Richtung und eine zweite Kolbenfläche (52) durch den Druck in der Betriebsbremskammer (20) in eine den Ventilkörper (36) gegen den zweiten Ventilsitz (48) drängenden und vom ersten Ventilsitz (44) abhebenden Richtung belastet, wobei
f) bei vom ersten Ventilsitz (44) und/oder bei vom zweiten Ventilsitz (48) abgehobenen Ventilkörper (36) eine Strömungsverbindung zwischen der Betriebsbremskammer (20) und der Federkammer (14) hergestellt wird.

2. Betriebsbrems- und Federspeicherbremszylinder nach Anspruch 1, **dadurch gekennzeichnet, dass** der Kolben (38) im weiteren eine dritte Kolbenfläche (60) und eine vierte Kolbenfläche (62) aufweist, wobei die dritte Kolbenfläche (60) durch den Druck in der Betriebsbremskammer (20) in einer den Ventilkörper (36) vom zweiten Ventilsitz (48) abhebenden und gegen den ersten Ventilsitz (44) drängenden Richtung und die vierte Kolbenfläche (62) durch den Druck in der Betriebsbremskammer (20) in einer den Ventilkörper (36) gegen den zweiten Ventilsitz (48) drängenden und vom ersten Ventilsitz (44) abhebenden Richtung belastet ist.

3. Betriebsbrems- und Federspeicherbremszylinder nach Anspruch 2, **dadurch gekennzeichnet, dass** eine Stellung des Kolbens (38) existiert, in welcher eine die zweite Druckfeder (46) aufnehmende, durch die vierte Kolbenfläche (62) begrenzte Kammer (76) mittels einer Kolbenbohrung (78) mit der Betriebsbremskammer (20) in Strömungsverbindung steht.

4. Betriebsbrems- und Federspeicherbremszylinder nach wenigstens einem der vorhergehenden Ansprüche, **dadurch gekennzeichnet, dass** der Ventilkörper (36) durch einen axial dichtenden Ring gebildet wird, an dem sich die erste Druckfeder (42) abstützt.

5. Betriebsbrems- und Federspeicherbremszylinder nach wenigstens einem der vorhergehenden Ansprüche, **dadurch gekennzeichnet, dass** der zweite Ventilsitz (48) an einem Boden (64) des Zylinders (40) ausgebildet ist.

## Claims

1. A combined service brake and spring brake cylinder (1) having:
a) a pressure-loaded diaphragm (24) which is arranged in a housing of the service brake cylinder (2) and which delimits, on the one side, a service brake chamber (20) which can be acted on with service brake pressure and, on the other side, a chamber which holds a restoring spring,
b) a spring brake piston (8) which is arranged in a housing of the spring brake cylinder (4) and which can be actuated by a preloaded spring (10) and which delimits, on the one side, a spring brake chamber (12) and, on the other side, a spring chamber (14) which holds a preloaded spring (10) and which has a piston rod (18) which carries a deaeration valve (16) which produces or blocks a flow connection between the spring chamber (14) and the service brake chamber (20),
**characterized in that** the deaeration valve (16) has the following features:
c) a piston (38) which carries a valve body (36) is provided, which piston (38) is guided in an axially movable manner in a piston (40), with at least one first pressure spring (42) which is supported on the piston (38) loading the valve body (36) against a first valve seat (44) on the piston (38),
d) the piston (38) is loaded by at least one second pressure spring (46), which is supported against the piston rod (18), in such a way that the valve body (36) is forced in the direction of a second valve seat (48) on the piston rod (18) and away from the first valve seat (44),
e) a first piston face (50) of the piston (38) is loaded by the pressure in the spring chamber (14) in a direction which lifts the valve body (36) from the second valve seat (48), and a second piston face (52) is loaded by the pressure in the service brake chamber (20) in a direction which forces the valve body (36) against the second valve seat (48) and lifts said valve body (36) up from the first valve seat (44), with
f) a flow connection between the service brake chamber (20) and the spring chamber (14) being produced when the valve body (36) is lifted up from the first valve seat (44) and/or when the valve body (36) is lifted up from the second valve seat (48).

2. The service brake and spring brake cylinder as claimed in claim 1, **characterized in that** the piston (38) also has a third piston face (60) and a fourth piston face (62), with the third piston face (60) being loaded by the pressure in the service brake chamber (20) in a direction which lifts the valve body (36) up from the second valve seat (48) and forces said valve body (36) against the first valve seat (44), and the fourth piston being loaded by the pressure in the service brake chamber (20) in a direction which forces the valve body (36) against the second valve seat (48) and lifts said valve body (36) up from the first valve seat (44).

3. The service brake and spring brake cylinder according to claim 2, **characterized in that** a position of the piston (38) exists in which a chamber (76) which holds the second pressure spring (46) and which is delimited by the fourth piston face (62) is flow-connected by means of a piston bore (78) to the service brake chamber (20).

4. The service brake and spring brake cylinder as claimed in at least one of the preceding claims, **characterized in that** the valve body (36) is formed by an axially sealing ring against which the first pressure spring (42) is supported.

5. The service brake and spring brake cylinder as claimed in at least one of the preceding claims, **characterized in that** the second valve seat (48) is formed on a base (64) of the cylinder (40).

## Revendications

1. Cylindre combiné de frein de service et de frein à accumulateur comprenant :
a) une membrane (24) disposée à l'intérieur d'un carter dudit cylindre de frein de service (2) et apte à être soumise à la pressurisation, qui limite, d'un côté, une chambre de frein de service (20) apte à être soumise à une pression de freinage et, d'autre côté, une chambre recevant un ressort de rappel,
b) un piston de frein à accumulateur (8) disposé à l'intérieur d'un carter dudit cylindre de frein à accumulateur (4), qui est apte à être actionné moyennant un ressort accumulateur (10) et qui limite, d'un côté, une chambre de frein à accumulateur (12) et, d'autre côté, une chambre de ressort (14) recevant un ressort accumulateur (10) et qui comprend une tige de piston (18) portant une soupape d'évacuation (16) lequel établit ou bloque une communication entre ladite chambre de ressort (14) et ladite chambre de frein de service (20),
**caractérisé en ce que** ladite soupape d'évacuation (16) présente les caractéristiques suivantes :
c) un piston (38) est disposé, qui porte un corps de soupape (36) et qui est guidé à l'intérieur d'un cylindre (40) pour déplacement axial, à au moins un premier ressort de pression (42), s'appuyant audit piston (38), chargeant ledit corps de soupape (36) contre une première siège de soupape (44) audit piston (38),
d) ledit piston (38) est chargé par au moins un deuxième ressort de pression (46) à ladite tige de piston (18) d'une telle façon, que ledit corps de soupape (36) soit poussé en un sens vers une deuxième siège de soupape (48) à ladite tige de piston (18), en étant éloigné de ladite première siège de soupape (44),
e) une première surface de piston (50) dudit piston (38) est chargée par la pression dans ladite chambre de ressort (14) en un sens d'enlèvement dudit corps de soupape (36) de ladite deuxième siège de soupape (48), pendant qu'une deuxième surface de piston (52) est chargée par la pression dans ladite chambre de frein de service (20) en un sens de poussée dudit corps de soupape (36) contre ladite deuxième siège de soupape (48) et de son enlèvement de ladite première siège de soupape (44),
f) dans lequel, quand ledit corps de soupape (36) est enlevé de ladite première siège de soupape (44) et/ou de ladite deuxième siège de soupape (48), une communication est établie entre ladite chambre de frein de service (20) et ladite chambre de ressort (14).

2. Cylindre de frein de service et de frein à accumulateur selon la revendication 1, **caractérisé en ce que** ledit piston (38) comprend en outre une troisième surface de piston (60) et une quatrième surface de piston (62), dont ladite troisième surface de piston (60) est chargée par la pression dans ladite chambre de frein de service (20) en un sens d'enlèvement dudit corps de soupape (36) de ladite deuxième siège de soupape (49) et de sa poussée contre ladite première siège de soupape (44), pendant que ladite troisième surface de piston (62) est chargée par la pression dans ladite chambre de frein de service (20( en un sens de poussée dudit corps de soupape (36) contre ladite deuxième siège de soupape (48) et de son enlèvement de ladite première siège de soupape (44).

3. Cylindre de frein de service et de frein à accumulateur selon la revendication 2, **caractérisé en ce qu'**il y a une position dudit piston (38), dans laquelle une chambre (76) recevant ledit deuxième ressort de pression et limitée par ladite surface de piston (62) se trouve en communication avec ladite chambre de frein de service (20) moyennant un alésage de piston (78).

4. Cylindre de frein de service et de frein à accumulateur selon au moins une quelconque des revendications précédentes, **caractérisé en ce que** ledit corps de soupape (36) est formé par un anneau à étanchéité axiale, auquel s'appuie ledit premier ressort de pression (42).

5. Cylindre de frein de service et de frein à accumulateur selon au moins une quelconque des revendications précédentes, **caractérisé en ce que** ladite deuxième siège de soupape (48) est formée à un fond (64) dudit cylindre (40).
